Europäisches Patentamt

European Patent Office

Office européen des brevets

(11) Veröffentlichungsnummer: **0 006 567**
**A1**

(12) **EUROPÄISCHE PATENTANMELDUNG**

(21) Anmeldenummer: 79102018.3

(22) Anmeldetag: 19.06.79

(51) Int. Cl.³: **H 05 B 3/40,** H 05 B 3/20, F 24 D 13/02

(30) Priorität: 24.06.78 DE 2827768
05.06.79 DE 2922732

(43) Veröffentlichungstag der Anmeldung: 09.01.80
Patentblatt 80/1

(84) Benannte Vertragsstaaten: AT BE CH FR GB IT LU NL SE

(71) Anmelder: Jagemann, Alfred, Warteweg 11, D-3401 Seulingen (DE)

(72) Erfinder: Jagemann, Alfred, Warteweg 11, D-3401 Seulingen (DE)

(74) Vertreter: Bibrach, Rudolf, Dipl.-Ing. et al, Bibrach und Rehberg Anwaltssozietät Postfach 7 38, D-3400 Göttingen (DE)

(54) Heizkörper für die elektrische Beheizung von Treppenstufen, Fussböden, Betonelementen u. dgl.

(57) Bei einem Heizkörper für die elektrische Beheizung von Treppenstufen, Fußböden, Betonelementen u. dgl. findet eine aus Heizlack (7) gebildete Heizfläche Verwendung, wobei der elektrische Strom über eine Vielzahl abwechselnd angeordneter Elektroden (5, 6) auf den Heizlack übertragen wird. Die Elektroden (5, 6) sind in einem isolierenden Behälter (8, 12, 13, 18, 19, 20, 21) untergebracht, der beispielsweise aus einem Kunststoffrohr bestehen kann. Wesentlich ist, daß nicht nur zwei Elektroden an einem Heizkörper vorgesehen sind, sondern eine Vielzahl derselben, die abwechselnd auf engem Raum angeordnet sind, damit die Stromverteilung gleichmäßig und damit auch die Erwärmung des Heizkörpers gleichmäßig erfolgt. Besonders einfach ist es, den Heizlack (7) auf der Oberfläche der Partikel (15) einer Kies- oder Sandschüttung (14) anzuordnen, wobei der Heizlack lediglich aufgesprüht werden muß. Eine solche Kies- oder Sandschüttung läßt sich einfach in einen Behälter, beispielsweise ein Kunststoffrohr, einbringen. Auch ein flächenmäßiger Aufbau mit Hilfe eines aus Randleisten (18, 19, 20) und Abdeckfolien (21) gebildeten isolierenden Behälters ist möglich.

## Heizkörper für die elektrische Beheizung von Treppenstufen, Fußböden, Betonelementen u. dgl.

Die Erfindung bezieht sich auf einen Heizkörper für die elektrische Beheizung von Treppenstufen, Fußböden, Betonelementen u. dgl. mit einer im wesentlichen aus Heizlack gebildeten Heizfläche, die zwischen mindestens zwei Elektroden, die mit je einer Leitung verbunden sind, aufgespannt ist. Treppenstufen und andere Betonelemente, beispielsweise Rampenkanten, Teile von Fußgängerbrücken u. dgl., die im Freien angeordnet sind, unterliegen während der kalten Jahreszeit bei Regen- oder Schneeeinwirkung einer Vereisung. Insbesondere bei freiliegenden Eingängen von öffentlichen Gebäuden macht sich eine Glättebildung mit den bekannten Folgen nachteilig bemerkbar. Aber auch bei der normalen Beheizung von Räumen vom Fußboden aus ist die Erfindung vorteilhaft einsetzbar, um mit geringem Aufwand eine Beheizung sicherzustellen.

Elektrische Fußbodenheizungen sind bekannt. Dabei werden Heizmatten, die aus nach dem Widerstandsprinzip erwärmbaren Drähten bestehen, die isoliert sind, in den Fußbodenestrich eingelegt. Die Stromzuleitungen werden in bekannter Weise angeschlossen. Diese Heizmatten sind vergleichsweise aufwendig, insbesondere hinsichtlich ihrer elektrischen Isolierung. Darüber hinaus tragen sie nicht zu einer Festigkeitssteigerung bei. Dies ist zwar bei normalen Fußböden im allgemeinen nicht erforderlich, kann sich aber als nützlich erweisen, beispielsweise bei freikragenden Podesten oder ähnlichen Elementen, die beheizt werden sollen.

Es ist bereits eine beheizbare Treppenstufe für Außentreppen bekannt, bei der zunächst eine das spätere Oberteil der Treppenstufe bildende Betonwanne aus Glasfaserbeton hergestellt wird. Diese Betonwanne weist etwa U-förmigen Querschnitt auf. Am Boden der Wanne werden mit Abstand zueinander zwei Elektroden befestigt. Der Raum zwischen den Elektroden wird von einer Heizfläche eingenommen, die aus einem auf die Betonwanne aufgespritzten Heizlack besteht. Die Elektroden sind mit je einer Leitung verbunden, die aus der Wanne nach draußen herausgeführt wird. Nach dem Trocknen des Heizlackes wird eine Polyurethanhinterschäumung als Wärmeisolierung aufgebracht. Diese besitzt etwa 25mm Dicke. Nach dem Aufschäumen wird die spätere Unterseite der Treppenstufe aus Glasfaserbeton gegossen und damit die Betonwanne verschlossen. Dabei kann eine Bindung des Glasfaserbetons zwischen dem Oberteil und dem Unterteil im Bereich des Heizkörpers nicht eintreten. Der Heizkörper erstreckt sich über den wesentlichen Querschnitt der Treppenstufe. Nur in den Randbereichen ist eine Verbindung möglich. Dabei ist nachteilig, daß derartige Treppenstufen in der Einzelherstellung jeweils aufgebaut werden müssen, was einer rationellen Fertigung sowohl der Heizkörper einerseits als auch der Treppenstufen entgegensteht. Der wesentliche Innenraum der Treppenstufe wird von dem Heizkörper und der Kunststoffunterschäumung eingenommen, so daß es nicht möglich ist, an dieser Stelle eine Armierung einzubringen. Auf die normale Beheizung von Räumen, insbesondere des Fußbodens von Räumen, läßt sich diese Art des Aufbaus einer Heizung nicht anwenden.

Der Erfindung liegt die Aufgabe zugrunde, einen Heizkörper der eingangs beschriebenen Art weiterzubilden,
der als einfaches vorgefertigtes Element herstellbar
ist und sich gleichermaßen für die Errichtung elektrischer Fußbodenheizungen wie auch zur Herstellung
von Treppenstufen, insbesondere solchen aus Beton, verwenden läßt.

Erfindungsgemäß wird dies bei einem Heizkörper der
eingangs beschriebenen Art dadurch erreicht, daß die
aus Heizlack bestehende Heizfläche auf bzw. in einem
Träger angeordnet ist, der über seine Länge verteilt
eine Mehrzahl der abwechselnd angeordneten Elektroden
trägt, und daß der Träger von einem isolierenden Behälter umgeben ist. Die Aufbringung des Heizlackes als
Heizfläche auf einen Träger, vorzugsweise nur auf dessen
Außenseite, ist in vielfacher Hinsicht vorteilhaft. Die
Aufbringung des Heizlackes kann sehr einfach geschehen.
Die Anordnung der Elektroden und die Heranführung der
Leitungen ist ebenfalls herstellungstechnisch sehr einfach, da hierfür insbesondere der Innenraum eines Rohres
genutzt werden kann. Wesentlich ist, daß über die Länge
des Rohres bzw. des Behälters verteilt eine Mehrzahl
von Elektroden abwechselnd angeordnet wird, derart, daß
die Elektroden voneinander einen nicht allzu großen Abstand aufweisen. Der Abstand sollte unter 50cm betragen.
Schließlich ist es beim Anmeldungsgegenstand vorteilhaft, die Isolierung zu realisieren; diese kann durch
ein weiteres Rohr realisiert werden. Hierzu gibt es verschiedene Möglichkeiten.

Besonders vorteilhaft ist es, wenn die aus Heizlack gebildete Heizfläche auf der Oberfläche der Partikel einer Kies- oder Sandschüttung angeordnet ist, die in dem
isolierenden Behälter untergebracht ist, über dessen
Länge verteilt - die Kies- oder Sandschüttung durchsetzend - die Mehrzahl von Elektroden jeweils abwechselnd angeordnet sind. Der elektrische auch in
Beton verlegbare Heizkörper besitzt damit einen besonders einfachen Aufbau. Der Heizlack läßt sich sehr
einfach auf die Partikel einer Kies- oder Sandschüttung
aufbringen und dort auftrocknen. Die Schüttung muß dann
nur noch zusammen mit den Elektroden und deren Leiter in
den Innenraum des Behälters eingebracht werden. Durch die
Verwendung eines schlauch- bzw. rohrförmigen oder eines
aus Randleisten und Abdeckfolien zusammengesetzten Behälters zur Unterbringung der Kies- oder Sandschüttung
ist der Heizkörper nachgiebig, so daß Beschädigungen des
Heizkörpers auch im verlegten Zustand beim Auftreten von
Spannungsrissen im Beton u. dgl. nicht zu erwarten sind.

Der isolierende Behälter kann aus einem beidendig verschlossenen, biegsamen Rohr, insbesondere aus Kunststoff,
bestehen, das an seinem einen Ende die Einführungen der
Leiter aufweist. Für die Gestaltung im einzelnen ergeben
sich verschiedene Möglichkeiten. Die Leiter können miteinander verdrillt und etwa in der Achse des schlauch-
bzw. rohrförmigen Behälters aufgehängt sein.

Der isolierende Behälter kann von einem dritten Rohr aus
Metall, insbesondere Stahlrohr, umgeben sein. Dies ist
einerseits vorteilhaft, wenn das Metallrohr gleichzeitig
eine Armierung des Betonteiles bilden soll. Andererseits
kann dieses Metallrohr geerdet werden, so daß jeder Heizkörper ordnungsgemäß elektrisch gesichert werden kann.

Es ist aber auch möglich, daß die Isolierung aus auf
den rohrförmigen Träger aufgeschobenen Abstandshaltern
besteht, die dann von einem Schutzrohr umgeben sind.
Das Schutzrohr kann durchaus auch aus Metall bestehen
und wiederum den zuvor beschriebenen Zwecken dienen.

Zur Vergrößerung der unterzubringenden Heizfläche kann
der rohrförmige Träger als Rippenrohr ausgebildet sein.
Durch das Abbrechen oder Ausbrechen der Rippen kann dann
in einfacher Weise Raum für die Anordnung der Elektroden
geschaffen werden. Diese sitzen unverrückbar auf dem
rohrförmigen Träger fest.

Der rohrförmige Träger kann in seinem Innern die Leiter
zu den einzelnen Elektroden aufweisen, die in regelmäßigen Abständen durch den rohrförmigen Träger nach
außen geführt sind und dort auf dem Umfang die Elektroden
für den Heizlack bilden.

Bei einer anderen Ausführungsform besteht der isolierende
Behälter aus Randleisten und zwei Abdeckfolien, die auf
der Unterseite und der Oberseite die Randleisten und die
Kies- oder Sandschüttung abschließen. Diese Ausführungsform eignet sich sowohl zur Beheizung von Fußböden in
Räumen u. dgl., als auch zur Herstellung von Sonderartikeln, beispielsweise einer beheizten Sitzbank in
einem Schwimmbad oder zur Herstellung von Warmhalteplatten für Speisen. Eine Vielzahl weiterer Anwendungen
sind denkbar. Die abwechselnd vorgesehenen Elektroden
können sich von einer Randleiste zweckmäßig zu der
anderen Randleiste erstrecken und aus metallischen
Drähten in Kabel- oder Stangenform bestehen. Insbesondere bei Drähten in Stangenform ist sichergestellt, daß die so gebildeten Elektroden leicht angeordnet werden können und dennoch zuverlässig in der Mitte der Höhe der Kies- oder Sandschüttung angeordnet sind. Elektroden der einen Art können dabei auf der einen Randleiste und die Elektroden der anderen Art auf der anderen Randleiste zusammengefaßt sein und jeweils mit einem der beiden Leiter verbunden sein. Auf diese Weise können identische Bauteile eingesetzt werden. Jede Randleiste trägt dann entsprechende Löcher zum Einstecken des freien Endes der Elektrodenstangen der jeweils anderen Randleiste. Es versteht sich, daß die Randleisten aus isolierendem Material, also beispielsweise aus Kunststoff od. dgl., bestehen.

Die Kies- oder Sandschüttung, die auch aus anderem Material, beispielsweise aus Blähton od. dgl., aufgebaut sein kann, trägt die Heizfläche. Die Kies- oder Sandschüttung kann unterschiedliche Korngröße aufweisen, so daß es diese Maßnahme erlaubt, eine mehr oder weniger große Heizfläche pro Meter axialer Erstreckung bzw. pro Quadratmeter Kies- oder Sandschüttung unterzubringen. Der Heizlack ist auf der Oberseite der Partikel der Kies- oder Sandschüttung durch Tauchen, Besprühen od. dgl. angeordnet.

Die Elektroden können durch örtliche Entfernung der die Leiter umgebenden Isolierung gebildet sein. Auch andere Ausführungsformen sind denkbar. Der Heizlack kann zusätzlich auch auf der Innenseite des isolierenden Behälters aufgebracht sein.

Die Erfindung wird anhand bevorzugter Ausführungsbeispiele weiter beschrieben. Es zeigen:

Fig. 1     einen Schnitt durch den Heizkörper in
           einer ersten Ausführungsform,

Fig. 2     einen Querschnitt durch den Heizkörper
           gemäß der Linie II-II in Fig. 1,

Fig. 3     eine ähnliche Darstellung wie Fig. 2 in
           einer abgewandelten Ausführungsform,

Fig. 4     eine weitere abgewandelte Ausführungsform im Schnitt,

Fig. 5     einen Längsschnitt durch den Heizkörper
           in einer weiteren Ausführungsform,

Fig. 6     einen Schnitt gemäß der Linie VI-VI in
           Fig. 5,

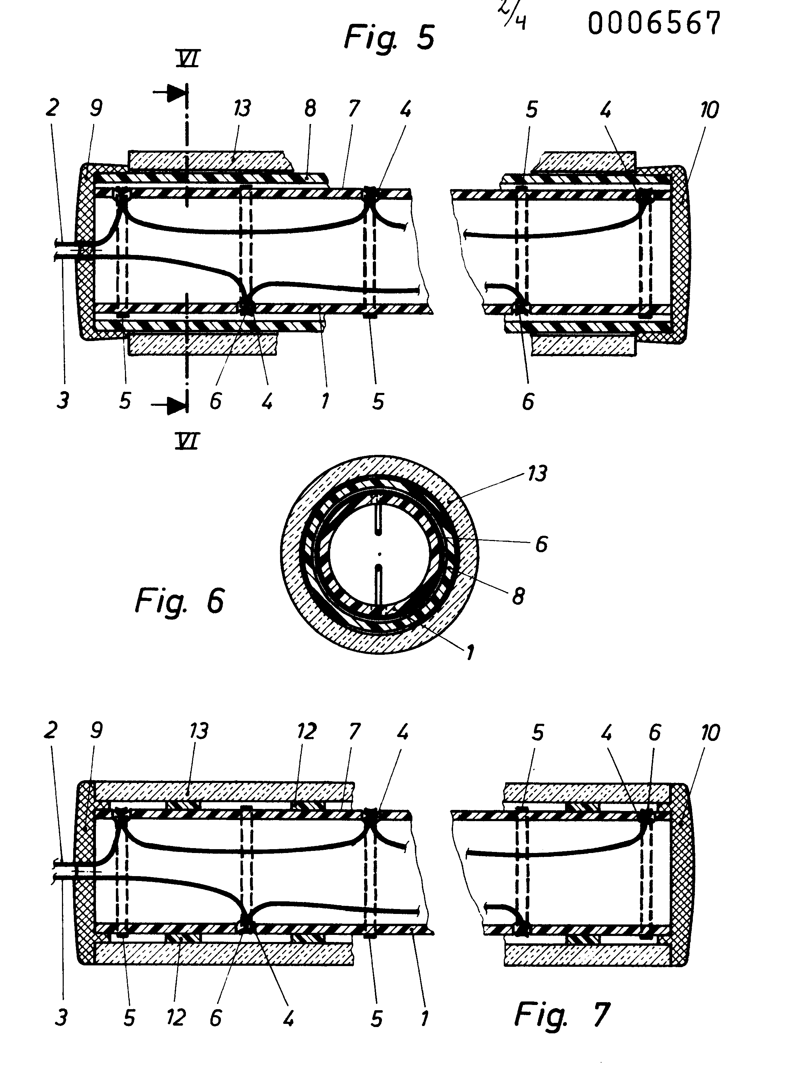

Fig. 7     einen Längsschnitt durch eine weirere abgewandelte Ausführungsform,

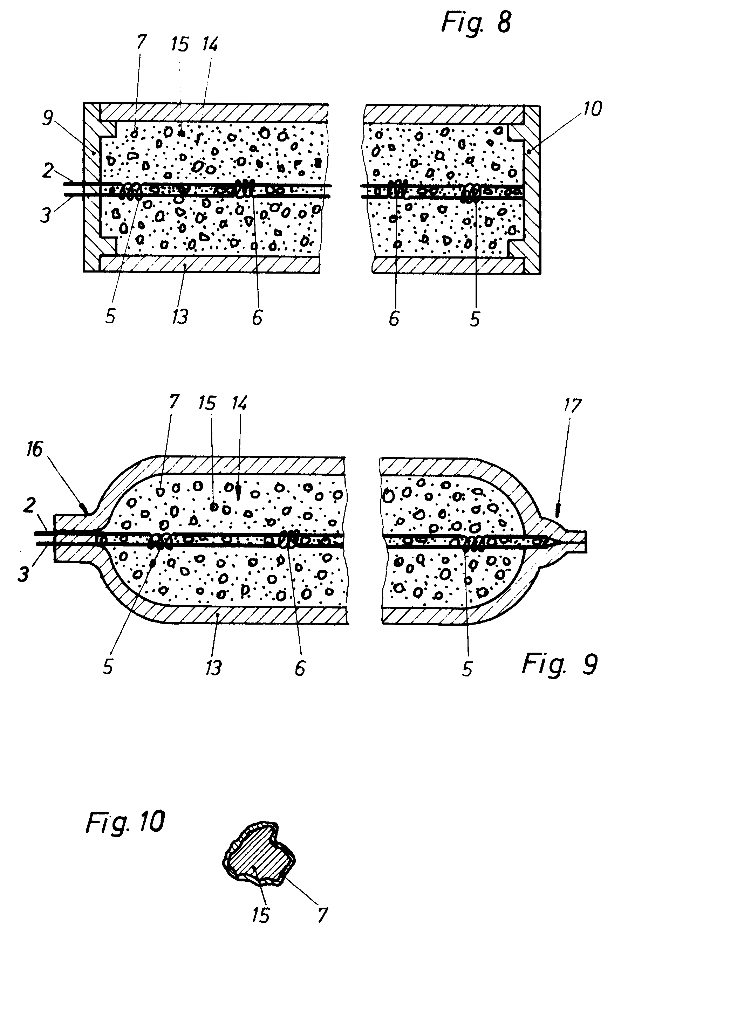

Fig. 8     einenLängsschnitt durch den Heizkörper in
           einer anderen Ausführungsform,

Fig. 9     einen Längsschnitt durch den Heizkörper in
           einer weiteren Ausführungsform,

Fig. 10    einen Schnitt durch einen Stein der Kies-
           oder Sandschüttung in vergrößerndem Maßstab,

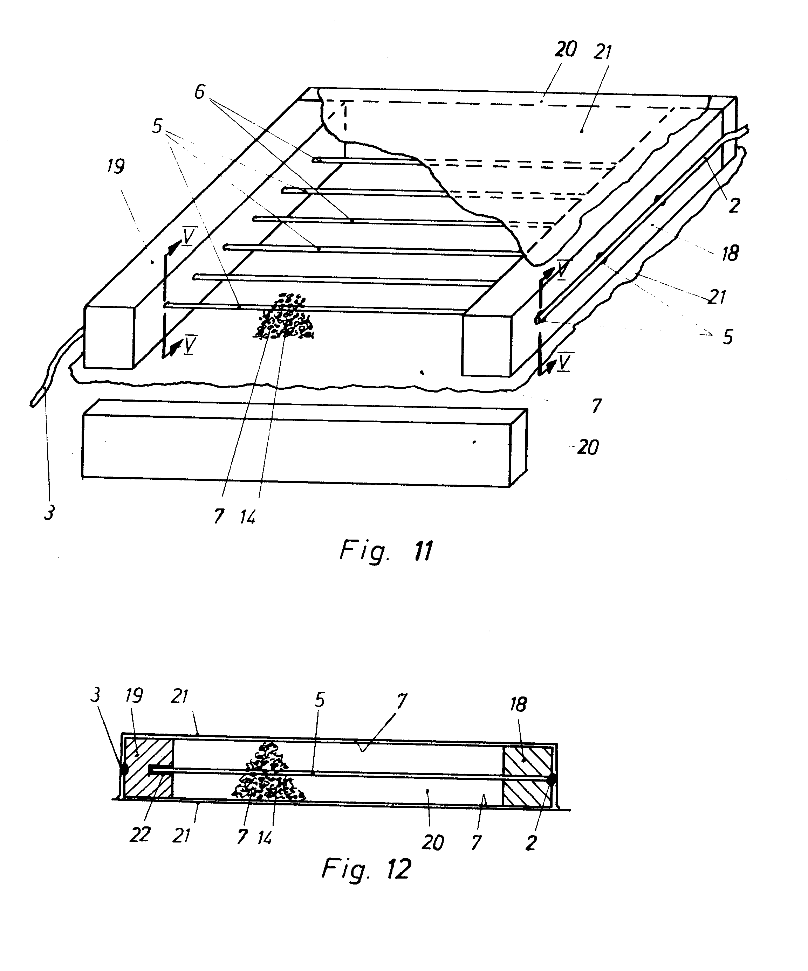

Fig. 11    eine perspektivische Darstellung des Heizkörpers in einer weiteren Ausführungsform und

Fig. 12     einen Schnitt gemäß der Linie V-V in
            Fig. 11.

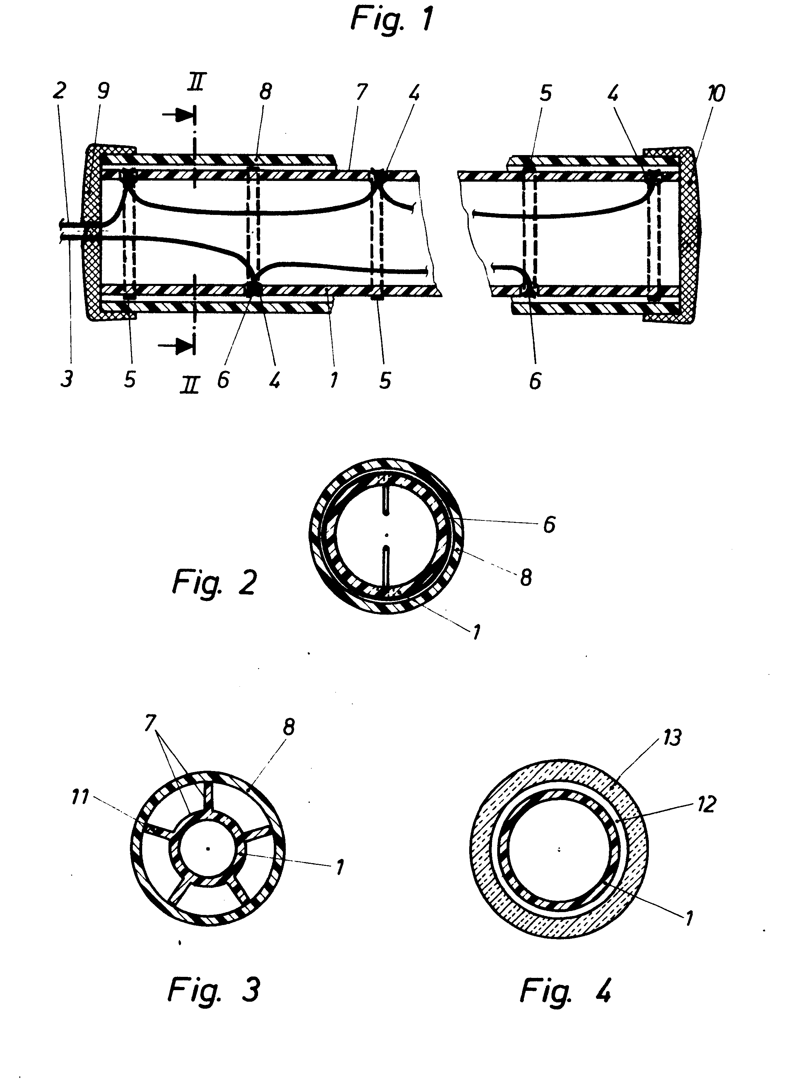

Der in Fig. 1 dargestellte Heizkörper weist innen beginnend einen rohrförmigen Träger 1, beispielsweise bestehend aus einem Kunststoffrohr, auf. Von dem einen
stirnseitigen Ende des rohrförmigen Trägers 1 her sind
die Leiter 2 und 3 herangeführt, die von innen nach
außen in Abständen jeweils abwechselnd den rohrförmigen
Träger 1 an den Durchbrechungen 4 durchdringen und auf
dessen Außenseite die Elektroden 5, 6 bilden. Die Leiter
2 und 3 können als normalisolierte elektrische Leiter
ausgebildet sein, die im Bereich auf dem Umfang, also
an der Stelle, an der sie die Elektroden 5, 6 bilden,
von ihrer Isolierung befreit sind. Der Abstand zwischen
zwei Elektroden 5, 6 beträgt keinesfalls mehr als 50cm,
im allgemeinen etwa 25cm. Der gesamte Außenumfang des
rohrförmigen Trägers 1 ist mit Heizlack 7 beschichtet,
bestrichen oder bespritzt, der die Heizfläche bildet.
Ein isolierender Behälter kann aus einem Isolierrohr 8,
beispielsweise aus Kunststoff, bestehen, welches den
rohrförmigen Träger 1 mit den beschriebenen Einzelteilen
aufnimmt. An beiden Stirnenden sind Verschlußkappen 9,
10 angeordnet, wobei die Leiter 2, 3 durch die Verschlußkappe 9 hindurchgeführt sind.

Es versteht sich, daß die Heizkörper in verschiedenen
Längenstufungen hergestellt werden können, so daß sie
zum Auslegen einer Fußbodenbeheizung, zum Herstellen eines
beheizbaren Betonelementes od. dgl. in der gewünschten
Längenabmessung zur Verfügung stehen. Auch in tragende
Bauteile können diese Heizkörper selbstverständlich eingebaut werden. Hier empfiehlt es sich, sie in der
neutralen Faser anzuordnen, so daß durch ihre Anordnung die Festigkeitseigenschaften in keiner Weise
nachteilig beeinflußt werden.

Fig. 3 zeigt eine modifizierte Ausführungsform; der
rohrförmige Träger 1 ist hier als Rippenrohr ausgebildet, so daß die mit Heizlack 7 versehene Oberfläche
vergrößert ist. Damit läßt sich eine höhere Leistungsdichte erzeugen. Außerdem ist der rohrförmige Träger 1
durch die Rippen 11 mittig in dem Isolierrohr 8 geführt.
Es ist aber auch möglich, wie Fig. 4 zeigt, Abstandshalter 12 in Abständen auf den Umfang des rohrförmigen
Trägers 1 aufzuschieben. Dann besteht die Möglichkeit,
daß das Schutzrohr 13 entweder aus Kunststoff bestehen
kann oder aber auch aus Metall, wenn der Heizkörper
gleichzeitig eine Armierung des Betonelementes darstellen soll.

Werden Abstandshalter 12 nicht eingesetzt, dann ist eine
Ausführungsform denkbar, wie es Fig. 5 zeigt. Hier ist
zunächst das Isolierrohr 8 vorgesehen. Dieses wird zusätzlich noch von dem Schutzrohr 13 aus Metall umgeben.
Dieses Schutzrohr 13 aus Metall kann geerdet werden, so
daß der Heizkörper ordnungsgemäß abgesichert ist.

Die Ausführungsform gemäß FIg. 7 setzt sich lediglich
aus einem rohrförmigen Träger 1 und dem Schutzrohr 13
aus Metall zusammen, wobei die Abstandshalter 12 eingesetzt werden, wie dies schon anhand von Fig. 4 verdeutlicht wurde. Es versteht sich, daß auch die Verschlußkappen 9 und 10 die Funktion von Abstandshaltern übernehmen bzw. mitübernehmen können. Sofern die Rohre nur eine relativ kurze Länge aufweisen, genügt die Verwendung der entsprechend ausgebildeten Verschlußkappen 9 und 10 unter Umständen.

Bei der Ausführungsform gemäß Fig. 8 ist in dem schlauch- bzw. rohrförmigen Schutzrohr 13, das eine entsprechende Länge aufweisen kann, eine Kies- oder Sandschüttung 14 untergebracht, wobei die Partikel 15 der Kies- oder Sandschüttung 14 auf ihrer Oberfläche den Heizlack 7 tragen, der dort durch Tauchen, Besprühen od. dgl. aufgebracht ist. Fig. 10 zeigt einen einzelnen Kieselstein, der auf seiner Oberfläche den Heizlack 7 trägt. Der gesamte Innenraum des als Schutzrohr 13 ausgebildeten Behälters ist wesentlich von dieser Kies- oder Sandschüttung 14 ausgefüllt. In der Kies- oder Sandschüttung 14 befinden sich noch die Elektroden 5, 6, die jeweils abwechselnd angeordnet sind. Die Elektroden 5, 6 sind an den Leitern 2, 3 dadurch gebildet, daß die Isolierung stellenweise entfernt wurde. Zweckmäßig werden die beiden Leiter 2,3 im Bereich der Elektroden 5, 6 miteinander verdrillt, so daß sich die Leiter 2, 3 gegenseitig halten. Die Leiter 2, 3 sind durch eine Verschlußkappe 9 hindurchgeführt und können an der gegenüberliegenden Verschlußkappe 10, die das Schutzrohr 13 verschließt, aufgehängt sein, so daß sie sich weitgehend in der Achse des Behälters befinden.

Bei der Ausführungsform gemäß Fig. 9 fehlen die beiden Verschlußkappen 9 und 10. Der Behälter besteht hier aus einem Abschnitt eines Kunststoffschlauches, der beidendig verschweißt ist. In die Verschweißungen 16 und 17 sind die Leiter 2, 3 eingefügt bzw. dort verankert. Auf diese Weise läßt sich der Heizkörper besonders einfach herstellen.

Bei der Ausführungsform gemäß den Fig. 11 und 12 wird der isolierende Behälter aus den Randleisten 18, 19, 20 und zwei Abdeckfolien 21 gebildet, wobei die Abdeckfolien 21 die Randleisten 18, 19, 20 von unten und von oben abschließen. In dem so gebildeten Innenraum wird die Kies- oder Sandschüttung 14 angeordnet, die auf ihrer Oberfläche den Heizlack 7 trägt. Die Elektroden 5, 6 bestehen hier aus Metallstäben, die etwa in der Mitte der Höhe der Randleisten 18 und 19 aufgelagert bzw. vorgesehen sind. Dabei sind die drei Elektroden 5 in der Randleiste 18 verankert und mit dem Leiter 2 verbunden. Die Elektroden 6 sind ebenso in der Randleiste 19 verankert und mit dem Leiter 3 verbunden. In den Randleisten 18 und 19 befinden sich an korrespondierender Stelle Löcher 22, in die wechselseitig die freien Enden der Metallstäbe bzw. der Elektroden 5, 6 eingesteckt werden. Wie ersichtlich, sind die Randleisten 18 und 19 mit ihren Elektroden identisch ausgebildet. Beim Aufbau eines solchen Heizkörpers, beispielsweise in einem Fußboden, wird zunächst die Abdeckfolie 21 auf der Unterseite ausgebreitet. Diese Abdeckfolie 21 besteht aus einer isolierenden Kunststoffolie. Sie kann auf der der Schüttung 14 zugekehrten Seite zusätzlich noch mit Heizlack 7 bestrichen sein. Darauf werden die beiden Randleisten 18 und 19 gelegt, wobei die Elektroden 5 und 6 gegenseitig in die Löcher 22 eingesteckt werden. An den Stirnseiten werden Randleisten 20 angelegt. Die Randleisten 18, 19, 20 bestehen aus isolierendem Material, beispielsweise aus Kunststoff. Sodann wird die Kies- oder Sandschüttung 14 eingebracht, die die ganze Höhe der Randleisten 18, 19, 20 einnimmt. Schließlich wird die obere Abdeckfolie 21 zu Isolierzwecken aufgelegt. Diese kann gemäß Fig. 11 an den Seitenrändern herabhängen und somit die Leiter 2 und 3 zusätzlich überdecken.

Die Ausführungsform der Fig. 11 und 12 kann in vielerlei Weise und für die unterschiedlichsten Anwendungszwecke realisiert werden, beispielsweise eingebaut in eine beheizbare Sitzplatte, in einer Wärmeplatte für Jungtiere, beispielsweise Ferkel. Es versteht sich, daß die Leiter 2, 3 außerhalb der Randleisten 18, 19 isoliert sind, während die Elektroden 5, 6 über ihre ganze Länge zwischen den Randleisten 18 und 19 keinerlei Isolierung aufweisen, damit der Strom übertritt von den Elektroden 5, 6 in den Heizlack auf der Kies- oder Sandschüttung 14 möglichst ungestört von statten geht.

Patentansprüche:

1. Heizkörper für die elektrische Beheizung von Treppenstufen, Fußböden. Betonelementen u. dgl., mit einer im wesentlichen aus Heizlack gebildeten Heizfläche, die zwischen mindestens zwei Elektroden, die mit je einer Leitung verbunden sind, aufgespannt ist, dadurch gekennzeichnet, daß die aus Heizlack (7) bestehende Heizfläche auf bzw. in einem Träger (1, 14) angeordnet ist, der über seine Länge verteilt eine Mehrzahl der abwechselnd angeordneten Elektroden (5, 6) trägt, und daß der Träger (1) von einem isolierenden Behälter (8, 12, 13, 18, 19, 20, 21) umgeben ist.

2. Heizkörper nach Anspruch 1, dadurch gekennzeichnet, daß die aus Heizlack (7) gebildete Heizfläche auf der Oberfläche der Partikel (15) einer Kies- oder Sandschüttung (14) angeordnet ist, die in dem isolierenden Behälter (8, 12, 13, 18, 19, 20, 21) untergebracht ist, über dessen Länge verteilt - die Kies- oder Sandschüttung (14) durchsetzend - die Mehrzahl von Elektroden (5, 6) jeweils abwechselnd angeordnet sind.

3. Heizkörper nach Anspruch 1 und 2, dadurch gekennzeichnet, daß der isolierende Behälter (8) aus einem beidendig verschlossenen, biegsamen Rohr, insbesondere aus Kunststoff, besteht, das an seinem einen Ende die Einführungen der Leiter (2, 3) aufweist.

4. Heizkörper nach Anspruch 3, dadurch gekennzeichnet, daß die Leiter (2, 3) miteinander verdrillt und etwa in der Achse des schlauch- bzw. rohrförmigen Behälters (8) aufgehängt sind.

5. Heizkörper nach Anspruch 1 bis 4, dadurch gekennzeichnet, daß der isolierende Behälter (8) von einem dritten Rohr aus Metall (13), insbesondere Stahlrohr, umgeben ist.

6. Heizkörper nach Anspruch 1 bis 5, dadurch gekennzeichnet, daß die Isolierung aus auf den rohrförmigen Träger (1) aufgeschobenen Abstandshaltern (12) besteht, die von einem Schutzrohr (13) umgeben sind.

7. Heizkörper nach Anspruch 1 bis 6, dadurch gekennzeichnet, daß der rohrförmige Träger (1) als Rippenrohr ausgebildet ist.

8. Heizkörper nach Anspruch 1 bis 7, dadurch gekennzeichnet, daß der rohrförmige Träger (1) in seinem Innern die Leiter (2, 3) zu den einzelnen Elektroden (5, 6) aufweist, die in regelmäßigen Abständen durch den rohrförmigen Träger (1) nach außen geführt sind und dort auf dem Umfang die Elektroden (5, 6) für den Heizlack bilden.

9. Heizkörper nach Anspruch 1 und 2, dadurch gekennzeichnet, daß der isolierende Behälter aus Randleisten (18, 19, 20) und zwei Abdeckfolien (21) besteht, die auf der Unterseite und der Oberseite die Randleisten und die Kies- oder Sandschüttung (14) abschließen.

10. Heizkörper nach Anspruch 1 und 9, dadurch gekennzeichnet, daß sich die abwechselnd vorgesehenen Elektroden (5, 6) von der einen Randleiste (18) zu der anderen Randleiste (19) erstrecken und aus metallischen Drähten in Kabel- oder Stangenform bestehen.

11. Heizkörper nach Anspruch 9 und 10, dadurch gekennzeichnet, daß die Elektroden der einen Art (5) auf der einen Randleiste (18) und die Elektroden der anderen Art auf der anderen Randleiste (19) zusammengefaßt sind und jeweils mit einer der beiden Leiter (2, 3) verbunden sind.

12. Heizkörper nach Anspruch 1 und 2, dadurch gekennzeichnet, daß die Kies- oder Sandschüttung (14) unterschiedliche Korngröße aufweist.

13. Heizkörper nach Anspruch 12, dadurch gekennzeichnet, daß der Heizlack (7) auf der Oberfläche der Partikel (15) der Kies- oder Sandschüttung (14) durch Tauchen, Besprühen od. dgl. angeordnet ist.

14. Heizkörper nach Anspruch 1 und 2, dadurch gekennzeichnet, daß die Elektroden (5, 6) durch örtliche Entfernung der die Leiter (2, 3) umgebenden Isolierung gebildet sind.

15. Heizkörper nach Anspruch 1 und 2, dadurch gekennzeichnet, daß auch auf der Innenseite des Behälters (8, 12, 13, 18, 19, 20, 21) Heizlack (7) aufgebracht ist.

Fig. 1

Fig. 2

Fig. 3

Fig. 4

Fig. 5

Fig. 6

Fig. 7

*Fig. 8*

*Fig. 9*

*Fig. 10*

Fig. 11

Fig. 12

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 715 046 (DAIKIN KOGYO) <br> * Seite 5, letzter Absatz; Figur 4 * | 1,8 |
| | -- | |
| | US - A - 3 425 864 (MOREY) <br> * Spalte 4, Zeilen 44-64 * | 1 |
| | -- | |
| | US - A - 3 105 136 (ASHENFARB) <br> * Spalte 2, letzter Absatz; Spalte 3, Absätze 1,2 * | 1 |
| | -- | |
| | US - A - 2 877 330 (KELM) <br> * Spalte 1, drei letzter Absätze; Spalte 2, Zeilen 1,2 * | 1,15 |
| | -- | |
| | FR - A - 508 726 (MEYER) · <br> * Seite 1, Zeilen 46-55; Seite 2, Zeilen 73-81 * | 1,3,13 |
| | -- | |
| | DE - A - 2 428 233 (ARMBRUSTER) <br> * Seite 1, Absatz 1 * | 1,2,9, 12,13 |
| | -- | |
| | DE - A - 1 936 237 (RITTER) <br> * Seite 8, Zeilen 6-22; Figur 4 * | 1,2,10 12 |
| | -- | |
| | DE - A - 1 615 494 (VIERLING) <br> ./. | 1,2,9, 10,12 |

**KLASSIFIKATION DER ANMELDUNG (Int.Cl. 3)**

H 05 B 3/40
3/20
F 24 D 13/02

**RECHERCHIERTE SACHGEBIETE (Int. Cl. 3)**

H 05 B 3/20
3/22
3/26
3/28
3/40
3/42
3/44
3/46
3/54
3/56
3/58
F 24 D 13/02

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-10-1979 | RAUSCH |

EPA form 1503.1  06.78

Europäisches
Patentamt

**EUROPÄISCHER RECHERCHENBERICHT**

Nummer der Anmeldung

0006567

EP 79 10 2018

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | * Seite 4, Absatz 4; Seite 5, Zeile 19 bis Seite 6, Zeile 1 *<br><br>-- <br><br>FR - A - 786 836 (S.G. DU QUARTZ)<br>* Seite 1, Zeilen 38-52; Figur 1 *<br><br>-- <br><br>FR - A - 1 380 190 (THERMAL SYNDICATE)<br>* Seite 3, Absatz 3 *<br><br>-- | <br><br><br><br>5,6<br><br><br><br><br><br>7 | |
| A | FR - A - 1 579 597 (A.C.E.C.)<br>* Seite 1, Zeilen 1-5 *<br><br>---- | 1 | RECHERCHIERTE SACHGEBIETE (Int. Cl. 3) |